# EUROPÄISCHE PATENTANMELDUNG

(11) **EP 1 172 615 A2**
(43) Veröffentlichungstag der Anmeldung: **16.01.2002**
(21) Anmeldenummer: 01115663.5
(22) Anmeldetag: 04.07.2001
(51) Int. Cl.: F24D 17/00

(54) **Warmwasseranlage mit einem Warmwasserspeicher**

(30) Priorität: 10.07.2000 AT 11762000
(71) Anmelder: Vaillant GmbH, 42859 Remscheid (DE)
(72) Erfinder: Klepka, Michael, 42369 Wuppertal (DE)
(74) Vertreter: Heim, Johann-Ludwig, Dipl.-Ing.

(57) **Zusammenfassung**

Warmwasseranlage mit einem Warmwasserspeicher (1), der mit einem Heizgerät (5) verbunden ist, und der über eine Brauchwasserleitung (15) mindestens eine Zapfstelle (16) versorgt, wobei eine Zirkulationsleitung (17) mit einer Zirkulationspumpe (18) vorgesehen ist, welche nahe der Zapfstelle (16) an die Brauchwasserleitung (15) angeschlossen ist und zum Wasserspeicher (1) zurückführt, wobei eine Steuerung (11) für die Zirkulationspumpe (18) im Heizgerät (5) vorgesehen ist. Um trotz eines hohen Komforts den Energieaufwand gering zu halten, ist vorgesehen, daß die Steuerung (11) mit einem externen Taster (22) verbunden ist, der eine Zeitschaltung startet, die die Zirkulationspumpe (18) für eine vorgegebene Zeit aktiviert.

## Beschreibung

Die Erfindung bezieht sich auf eine Warmwasseranlage gemäß dem Oberbegriff des Anspruches 1.

Bei derartigen Warmwasseranlagen ist in der Brauchwasserleitung ein Temperaturfühler angeordnet, der mit der Steuerung der Zirkulationspumpe verbunden ist, wobei bei Unterschreiten einer bestimmten Temperatur im Bereich dieses Temperaturfühlers die Zirkulationspumpe aktiviert wird.

Weiter sind auch Warmwasseranlagen bekannt, bei denen die Zirkulationspumpe in bestimmten Zeitabständen für eine vorbestimmte Zeitspanne aktiviert wird.

Der Nachteil dieser Lösungen besteht darin, daß die Zirkulationspumpe oft läuft und damit Energie verbraucht, ohne daß dies zu einer Erhöhung des Komforts für den Benutzer führt.

Ziel der Erfindung ist es, diese Nachteile zu vermeiden und eine Warmwasseranlage der eingangs erwähnten Art vorzuschlagen, bei der trotz nur kurzer Laufzeiten der Zirkulationspumpe ein hohes Maß an Benutzerkomfort erreichbar ist.

Erfindungsgemäß wird dies bei einer Warmwasseranlage der eingangs erwähnten Art durch die kennzeichnenden Merkmale des Anspruches 1 erreicht.

Durch die vorgeschlagenen Maßnahmen ist es auf einfache Weise möglich, bei Bedarf die Zirkulationspumpe zu aktivieren. Da dies in der Regel nur dann erfolgen wird, wenn in nächster Zeit eine Zapfung von Brauchwasser geplant ist, wird die Zirkulationspumpe eben nur entsprechend selten aktiviert. Dadurch ergibt sich einerseits eine Einsparung an Hilfsenergie und es wird auch eine unnötige Abkühlung des Warmwassers vermieden.

Durch die Merkmale des Anspruches 2 ergibt sich der Vorteil einer sehr einfachen Bedienbarkeit der Steuerung, wobei bei mehreren Zapfstellen auch mehrere parallel geschaltete Taster vorgesehen sein können, die nahe den Zapfstellen angeordnet werden können.

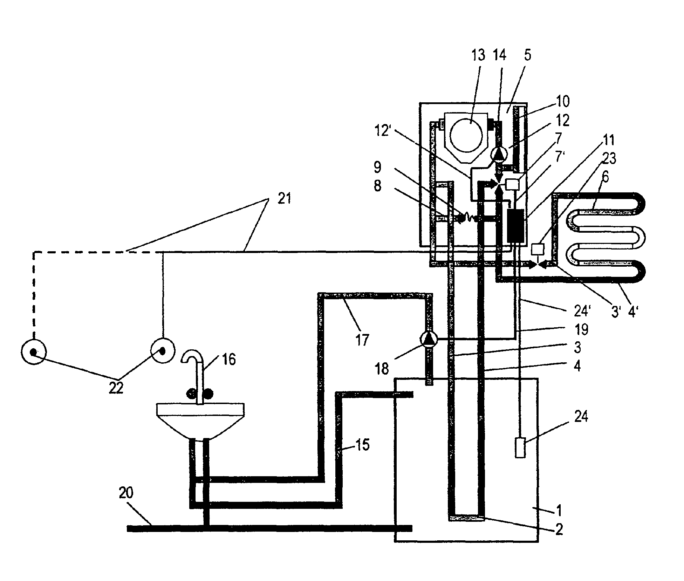

Die Erfindung wird nun anhand der Zeichnung näher erläutert, die schematisch eine erfindungsgemäße Warmwasseranlage zeigt.

Ein Warmwasserspeicher 1 weist in seinem Inneren einen Wärmetauscher 2 auf, der über eine Vorlauf- und eine Rücklaufleitung 3, 4 mit einem Heizgerät 5 verbunden ist. Weiter ist im Inneren des Warmwasserspeichers 1 ein Temperaturfühler 24 angeordnet, der über eine Steuerleitung 24' mit der Steuerelektronik 11 des Heizgerätes 5 verbunden ist. Das Heizgerät 5 versorgt über weitere Vorlauf- und Rücklaufleitungen 3', 4' eine Heizkörperanordnung 6.

Das Heizgerät 5 kann sowohl ein Umlaufwasserheizer als auch ein Kessel darstellen.

Weiter ist ein Umschaltventil 7 vorgesehen, an dem die beiden Rücklaufleitungen 4, 4' sowie eine zu einem Primär-Wärmetauscher 13 führende Leitung 14 angeschlossen sind, und mit dem entweder die Heizkörperanordnung 6 oder der Warmwasserspeicher 1, bzw. dessen Wärmetauscher 2 mit Heizwasser versorgt wird. Die Vorlaufleitung 3' zweigt von der Vorlaufleitung 3 ab.

Weiter ist insbesondere bei einem Umlaufwasserheizer eine Bypaßleitung 8 vorgesehen, in der ein Ventil 9 angeordnet ist, um einen Mindestwasserumlauf bei geschlossenem Thermostatventil 23 in einem kleinen Kreis sicherzustellen. Bei einem Kessel entfallen Bypaßleitung 8 und Ventil 9.

Das Heizgerät 5 weist ein Ausgleichsgefäß 10, eine Steuerelektronik 11 sowie eine Umwälzpumpe 12 auf, die in der Anschlußleitung 14 angeordnet ist.

Das Umschaltventil 7 und Umwälzpumpe 12 sind über die Steuerleitung 7' und 12' mit der Steuerelektronik 11 verbunden.

Der Warmwasserspeicher 1 ist über eine Brauchwasserleitung 15 mit einer oder mehreren Zapfstelle(n) 16 verbunden. An die Brauchwasserleitung 15 ist nahe den Zapfstellen 16 eine Zirkulationsleitung 17 angeschlossen, in der eine Zirkulationspumpe 18 eingebaut ist. Weiter sind die Zapfstellen 16 an eine Kaltwasserleitung 20 angeschlossen, die in den Warmwasserspeicher 1 mündet.

Ein Elektromotor der Zirkulationspumpe 18 ist über eine Steuerleitung 9 mit der Steuerelektronik 11 verbunden, die weiter über eine Signalleitung 21 mit einem oder mehreren parallel geschalteten Taster(n) 22 verbunden ist (sind). Die Taster liegen elektrisch parallel zueinander und örtlich in der Nähe der Zapfstelle(n). Dabei wird durch ein Signal des Tasters 22 ein in der Steuerelektronik 11 angeordnetes Zeitglied gestartet. Dieses bestimmt die Dauer der Aktivierung der Zirkulationspumpe 18, die durch die Betätigung des Tasters 22 ausgelöst wird.

Wird nach einer längeren Zapfpause, während der die Temperatur des Brauchwassers in der Brauchwasserleitung auf eine zu geringe Temperatur absinkt, der Taster 22 betätigt, so startet die Zirkulationspumpe 18. Dabei wird das abgekühlte Brauchwasser abgezogen und in Warmwasserspeicher 1 geleitet und warmes Brauchwasser aus dem Warmwasserspeicher 1 in die Zirkulationsleitung 17 eingebracht. Wird nun die Zapfstelle 16 geöffnet, so steht ausreichend warmes Brauchwasser zur Verfügung und es braucht nicht entsprechend viel abgekühltes Brauchwasser abfließen gelassen zu werden, bis das gezapfte Brauchwasser eine ausreichend hohe Temperatur aufweist. Dabei ist auch noch zu berücksichtigen, daß während des Abfließens des abgekühlten Brauchwassers, kaltes Wasser über die Kaltwasserleitung 20 in den untersten Bereich des Warmwasserspeichers 1 einströmt.

Da das Starten der Zirkulationspumpe 18 über den Taster 22 nur bei Bedarf erfolgt, ergibt sich einerseits eine Einsparung an Hilfsenergie für den Betrieb der Zirkulationspumpe 18 und andererseits eine geringere Abkühlung des Speicherinhaltes, da eben weniger abfließendes Brauchwasser durch in den Warmwasserspeicher einfließendes Kaltwasser ersetzt werden muß. Beim Starten der Zirkulationspumpe 18 über einen Taster kann ein Zeitglied in der Steuerelektronik 11 aktiviert werden, die den Motor der Zirkulationspumpe nach Ablauf einem im Voraus einstellbaren Zeit wieder stillsetzt.

## Patentansprüche

1. Warmwasseranlage mit einem Warmwasserspeicher (1), der mit einem Heizgerät (5) verbunden ist, und der über eine Brauchwasserleitung (15) mindestens eine Zapfstelle (16) versorgt, wobei eine Zirkulationsleitung (17) mit einer Zirkulationspumpe (18) vorgesehen ist, welche nahe der Zapfstelle (16) an die Brauchwasserleitung (15) angeschlossen ist und zum Wasserspeicher (1) zurückführt, wobei eine Steuerung (11) für die Zirkulationspumpe (18) im Heizgerät (5) vorgesehen ist **dadurch gekennzeichnet, daß** die Steuerung (11) mit einem externen Taster (22) verbunden ist, der eine Zeitschaltung startet, die die Zirkulationspumpe (18) für eine vorgegebene Zeit aktiviert.

2. Warmwasseranlage nach Anspruch 1, **dadurch gekennzeichnet, daß** der externe Taster (22) in der Nähe einer Zapfstelle (16) angeordnet ist.
